# FASCICULE DE BREVET EUROPEEN

(11) **EP 2 688 414 B1**
(45) Date de publication et mention de la délivrance du brevet: **06.11.2019**
(21) Numéro de dépôt: 12733519.8
(22) Date de dépôt: 20.03.2012
(51) Int. Cl.: A21D 8/02, A21D 8/06

(54) **PROCÉDÉ DE FABRICATION DE PAIN**
BROTHERSTELLUNGSVERFAHREN
METHOD FOR MAKING BREAD

(30) Priorité: 21.03.2011 CH 478112011
(43) Date de publication de la demande: 29.01.2014
(73) Titulaire: Paillasse International S.A., 2000 Neuchâtel (CH)
(72) Inventeur: POULY, Aimé, . (CH)
(74) Mandataire: Moinas & Savoye SARL
(86) Numéro de dépôt international: PCT/IB2012/000536
(87) Numéro de publication internationale: WO 2012/127297

(56) Documents cités:
- EP-A1- 0 886 472
- EP-A2- 0 056 211
- EP-A2- 1 352 564
- FR-A1- 2 442 588
- US-A- 6 004 600

## Description

La présente invention se rapporte à un procédé de fabrication de pain, notamment d'un pain de type artisanal à longue fermentation destiné à être vendu en frais ou précuit surgelé au détail, notamment en boulangerie. Ce pain a un taux d'hydratation anormalement élevé tout en se présentant comme un pain traditionnel. Il se distingue en outre par une excellente valeur nutritive, due en partie à un taux particulièrement bas en acide phytique et une haute teneur en vitamines et oligo-éléments. Malgré cela, il est obtenu en pâte directe, c'est-à-dire sans levain.

La fabrication du pain est traditionnellement réalisée à partir de farine panifiable, mélangée à de l'eau pour faire une pâte, qui est additionnée de sel et de levure de boulangerie et éventuellement de levain, souvent sous forme d'une pâte préalablement fermentée.

La pâte ainsi formée, relativement épaisse est alors pétrie, la fermentation se développant pendant une durée de six heures environ. Un pain traditionnel a un taux d'hydratation de l'ordre de 65 %.

Le "taux d'hydratation", terme consacré en boulangerie, est le rapport entre les quantités d'eau et de matières sèches présentes dans la pâte.

En variant les caractéristiques de composition de la pâte, de durée et vitesse de pétrissage et d'autres encore telle que la température, on obtient l'infinie variété des pains façonnés de la main de l'homme.

Par ailleurs, on connaît et on trouve sur le marché des pains sortant de l'ordinaire, à longue conservation et à faux taux d'humidité, et un exemple d'un tel pain est celui qui est décrit dans le brevet européen EP 0 886 472.

Le problème avec ce genre de pain est qu'il nécessite l'adjonction de levain. Le boulanger doit donc préparer celui-ci à l'avance, le conserver séparément, sans oublier de l'ajouter dans la pâte, et au bon moment, ce qui lui complique la vie, l'oblige à des horaires "extensibles" ou à engager du personnel s'il veut s'en tenir à des horaires normaux.

Faute de levain, le pain obtenu selon EP 0 886 472 ressemblerait à un pain de pâte directe traditionnel, c'est-à-dire, avec une richesse aromatique pauvre et des risques de développement d'acidités nuisibles aux qualités organoleptiques.

L'invention vise à remédier au moins partiellement à ces problèmes, tout en facilitant le travail du boulanger, en permettant la préparation d'un pain de type artisanal de longue conservation, sans risque de développement d'acidité, sans utilisation de levain, tout en ayant les spécificités qui ont fait le succès du pain à longue conservation précité.

Le procédé de fabrication de ce pain à longue conservation sans levain, selon la revendication 1, dont la pâte est à base de farine, d'eau, de sel et de levure, est caractérisé en ce que la pâte a la composition suivante, exprimée en parties pondérales:
- farine panifiable 100 parties
- eau 90 à 100 parties
- sel 2 à 3 parties
- levure de boulangerie 0,05 à 0,1 partie,
c'est-à-dire que la quantité pondérale de levure par rapport à la farine est comprise entre 0,05% et 0,1%,
et en ce que la farine utilisée est une farine riche en protéines comprenant entre 12% et 15% de protéines et provenant d'un ou plusieurs blés non germés, en ce que la fermentation est d'une durée supérieure à 36 heures, que le pétrissage de la pâte est effectué en une seule étape à vitesse variable, dont la durée totale est d'au moins 40 minutes, l'adjonction de sel à la pâte étant réalisé en fin de pétrissage, par exemple 5 à 10 minutes avant, et enfin en ce que la température de la pâte reste inférieure à 30°C pendant toute la fermentation et/ou pendant tout le pétrissage.

Il convient de relever ici la faible teneur en levure, globalement de 10 à 100 fois moins que ce qui se pratique traditionnellement, où les quantités de levure par rapport à la farine est de l'ordre de 100 à 200 g/kg.

Il convient aussi d'observer, par rapport au procédé décrit EP 0 886 472 que, outre l'absence de levain, la quantité de levure est inférieure, que la fermentation est sensiblement plus longue et que le pétrissage s'effectue en une seule étape au lieu de deux, facilitant aussi de ce point de vue le travail du boulanger.

Avantageusement, le taux d'hydratation de la pâte avant fermentation est compris entre 90 et 100 %.

Les farines utilisées dans la préparation de la pâte sont des farines provenant de blés "forts", c'est-à-dire des farines riches en protéines, comprenant de 12 à 15 % de protéines.

On utilisera avantageusement un assemblage de farines de blé tendre, un peu à la manière des vins dont certains d'entre eux sont aussi des assemblages. Il s'agira de farines provenant de blés non germés. La germination du blé augmente sa teneur en malt et un excès de malt aurait pour effet de contrecarrer la longue fermentation en faisant démarrer celle-ci trop rapidement (temps de chute supérieur à 200 selon les critères de la meunerie)

La composition de la pâte est la suivante, exprimée en parties pondérales :

| | |
|---|---|
| - farine panifiable | 100 parties |
| - eau | 90 à 100 parties |
| - sel | 2 à 3 parties |
| - levure de boulangerie | 0,05 à 0,1 partie |

par exemple
- farine panifiable de blé non germé, riche en gluten 100 kg
- eau 90 à 100 1, soit 90 à 100 kg
- sel 2,5 kg
- levure de boulangerie 50 à 100 g
correspondant en fait à 95 kg d'eau pour 100 kg de farine, soit un taux d'hydratation de 95 % en chiffres arrondis.

Le pain selon l'invention peut être fabriqué en préparant une pâte par mélange de la farine considérée avec de l'eau et la levure. On pétrit cette pâte, puis on la sépare en unités individuelles de l'ordre de 5 à 20 kg, qu'on laisse reposer en sorte que la durée de fermentation totale soit au moins de 36 heures. Enfin on façonne la pâte à la main en y découpant des pâtons avant de procéder immédiatement à la cuisson sans permettre qu'une deuxième fermentation s'établisse. Dans un pain industriel classique, la pâte est laissée en blocs de 250 kg environ, le façonnage est généralement effectué à la machine et la pâte subit une deuxième fermentation avant cuisson.

Avantageusement aussi, la cuisson est conduite à une température comprise entre 200 et 220°C pendant une durée comprise entre 20 et 30 minutes, en enlevant la vapeur d'eau au tout début de la coloration de la pâte.

### EXEMPLES (pas selon l'invention)

On prépare un pain à partir d'une pâte constituée de farine panifiable, ayant une teneur en protéines de 13 %, bien reposée, au minimum pendant un mois. La pâte obtenue en ajoutant de l'eau froide, de préférence à une température inférieure à 15°C, est très liquide comparativement à une pâte à pain traditionnelle.

La farine utilisée est un assemblage de farine de froment, de gluten, de farine de malt (orge) et éventuellement d'acide ascorbique.

On pétrit en veillant à ce que la température n'excède pas 30°C maximum dans un pétrin, par exemple un pétrin spirale pendant 25 minutes environ à première vitesse (50 tours/minute), puis on ajoute le sel et on continue le pétrissage, toujours à 30°C maximum, dans le même pétrin en deuxième vitesse (120 tours/minute) pendant au moins 5 minutes.

Une fois le pétrissage terminé, on répartit la pâte dans des bacs par lots de 15 kg, ce qui permet d'éviter un échauffement de cette pâte si elle était maintenue, compte tenu ici de la longue durée de fermentation, dans un grand volume. L'échauffement de la pâte entraînerait le développement d'une acidité qui empêcherait les arômes de se développer.

On entrepose la pâte pendant 42 heures de façon à laisser se développer la fermentation, qui n'est que de l'ordre de 2 à 4 heures dans une fabrication traditionnelle.

La pâte, qui était très liquide à la fin du pétrissage, est devenue, après cette longue fermentation, très douce, homogène, très souple et ne colle plus.

On retourne alors délicatement les lots de 15 kg sur une table bien farinée pour former pour chaque lot un grand rectangle dans lequel on découpe par exemple 50 baguettes de 300 g, qu'on façonne en les roulant dans la farine et qu'on dépose sur les tapis à enfourner. On façonne à la main, sans retravailler la pâte, et non à la machine comme cela est fréquent dans une fabrication traditionnelle.

L'enfournage est immédiat, sans attendre la deuxième fermentation, dans un four à une température comprise entre 200°C et 220°C avec vapeur, qu'on enlève au début de la coloration pour obtenir un pain à croûte croustillante. Le temps de cuisson est d'environ 25 minutes.

Mentionnons que dans une fabrication traditionnelle, l'enfournage a lieu à l'issue d'une deuxième fermentation de l'ordre de 1 à 1,5 heures.

On obtient ainsi un pain qui, à l'instar de celui obtenu par le procédé décrit dans EP 0 886 472, est :
- un pain de longue conservation (au moins 2 à 3 jours avant de commencer à racir),
- est croustillant,
- présente finesse aromatique remarquable avec des notes de blé écrasé, noisettes rôties et sucre caramélisé,
- une mie alvéolée,
- un bon indice glycémique,
- un taux d'hydratation très élevé (90 à 100%)

Avantage déterminant, ce fort taux d'hydratation du pain réduit la quantité de farine nécessaire, ce qui permet de produire, à qualité égale, voire supérieure, des pains meilleur marché, ou d'augmenter les marges du boulanger, à prix de vente égal.

Autre avantage pour le boulanger, il n'est pas nécessaire de travailler la nuit puisque, par suite de la durée de fermentation, la même pâte peut être utilisée pendant 24 heures. De plus, le processus sans deuxième fermentation permet d'obtenir en une heure et à n'importe quel moment de la journée, une fournée supplémentaire de qualité irréprochable.

En revanche, par rapport au pain de EP 0 886 472, ce pain est obtenu en pâte directe, c'est-à-dire sans levain ou pâte d'une précédente fabrication, ce qui facilite encore plus le travail du boulanger tant dans le nombre d'opérations à effectuer qui est en diminution que le respect strict du minutage des opérations successives.

En d'autres terme, le procédé selon l'invention permet d'obtenir un pain de qualité supérieure et de longue conservation, comparable à celui du pain selon EP 0 886 472, en rendant moins pénibles et contraignantes les activités boulangères de l'artisan, en mettant en œuvre un procédé de type pâte directe, à fermentation longue, et sans les inconvénients et défauts propres à des pains obtenus de façon traditionnelle par un procédé de ce type.

Toujours à titre d'exemples, on peut de la même façon préparer des pains foncés ou de spécialités en utilisant au départ des farines contenant des ingrédients supplémentaires, tels que de la farine d'orge, de la farine d'orge torréfié, de la farine de seigle de la farine d'avoine, de la farine de millet, de la farine de maïs, de la farine de sorgho, de la farine de manioc, de la farine complète d'épeautre, de l'épeautre pur égrugé, des flocons de blé maltés pourvu que ceux-ci ne soient pas en excès.

## Revendications

1. Procédé de fabrication de pain à longue conservation sans levain, dont la pâte est à base de farine, d'eau, de sel et de levure, **caractérisé en ce que** la pâte a la composition suivante, exprimée en parties pondérales :
| | |
|---|---|
| - farine panifiable | 100 parties |
| - eau | 90 à 100 parties |
| - sel | 2 à 3 parties |
- levure de boulangerie 0,05 à 0,1 partie, c'est-à-dire que la quantité pondérale de levure par rapport à la farine est comprise entre 0,05% et 0,1%,
et **en ce que** la farine utilisée est une farine riche en protéines comprenant entre 12% et 15% de protéine et provenant d'un ou plusieurs blés non germés, **en ce que** la fermentation est d'une durée supérieure à 36 heures, **en ce que** le pétrissage de la pâte est effectué en une seule étape à vitesse variable dont la durée totale est d'au moins 40 minutes, l'adjonction de sel à la pâte étant réalisé en fin de pétrissage, et enfin **en ce que** la température de la pâte reste inférieure à 30°C pendant toute la fermentation et/ou pendant tout le pétrissage.

2. Procédé selon la revendication 1, **caractérisé en ce que** le taux d'hydratation de la pâte avant fermentation est compris entre 90 et 100 %.

3. Procédé selon l'une quelconque des revendications 1 à 2, **caractérisé en ce qu'**on prépare une pâte en mélangeant de la farine, de l'eau et de la levure, qu'on pétrit celle-ci en une seule étape à vitesse variable, puis qu'on sépare la pâte en unités individuelles de l'ordre de 5 à 20 kg, qu'on laisse reposer en sorte que la durée de fermentation totale soit supérieure à 36 heures, et qu'enfin on façonne la pâte à la main en y découpant des pâtons avant de procéder immédiatement à la cuisson sans permettre une deuxième fermentation.

4. Procédé de fabrication du pain selon l'une des revendications précédentes, **caractérisé en ce que** la vitesse de pétrissage est plus grande à la fin qu'au début.

5. Procédé de fabrication du pain, selon l'une des revendications 3 ou 4, **caractérisé en ce que** la cuisson est conduite à une température comprise entre 200 et 220 °C pendant une durée comprise entre 20 et 30 minutes, en enlevant la vapeur d'eau au tout début de la coloration de la pâte.

## Patentansprüche

1. Verfahren zur Herstellung von ungesäuertem Brot mit langer Haltbarkeit, bei dem der Teig auf Mehl, Wasser, Salz und Hefe basiert, **dadurch gekennzeichnet, dass** der Teig die folgende Zusammensetzung aufweist, genannt in Gewichtsanteilen:
- Brotmehl 100 Teile
- Wasser 90 bis 100 Teile
- Salz 2 bis 3 Teile
- Bäckerhefe 0,05 bis 0,1 Teil, das heißt, dass der Gewichtsanteil der Hefe im Verhältnis zum Mehr zwischen 0,05% und 0,1 % liegt,
und dass das verwendete Mehl ein Mehl ist, welches reich an Proteinen ist, umfassend zwischen 12 und 15% Protein und welches von einem oder mehreren nicht gekeimten Weizen stammt, und, dass die Fermentierung eine Länge von mehr als 36 Stunden umfasst, und, dass der Knetvorgang des Teiges in einem einzigen Schritt mit variabler Geschwindigkeit ausgeführt wird, dessen Länge wenigstens 40 Minuten umfasst, wobei die Zugabe von Salz am Ende des Knetvorgangs erfolgt, und, dass die Temperatur des Teigs unterhalb von 30°C bleibt während der gesamten Fermentierung und/oder des gesamten Knetvorgangs.

2. Verfahren gemäß Anspruch 1, **dadurch gekennzeichnet, dass** der Hydratisierungsgrad des Teigs vor der Fermentierung zwischen 90 und 100 % liegt.

3. Verfahren gemäß einem der Ansprüche 1 bis 2, **dadurch gekennzeichnet, dass** man einen Teig zubereitet, indem man Mehl, Wasser und Hefe mischt, diesen in einem Schritt mit variabler Geschwindigkeit knetet, anschließend den Teig in einzelne Einheiten der Größenordnung 5 bis 20 kg teilt, dass man den Teig ruhen lässt, so dass die Fermentierungsdauer insgesamt mehr als 36 Stunden beträgt, und, dass man letztendlich den Teig von Hand formt, unmittelbar bevor er gebacken wird, ohne eine zweite Fermentierung zuzulassen.

4. Verfahren zur Herstellung von Brot gemäß einem der vorangehenden Ansprüche, **dadurch gekennzeichnet, dass** die Geschwindigkeit des Knetvorgangs am Ende höher ist als am Anfang.

5. Verfahren zur Herstellung von Brot gemäß einem der Ansprüche 3 oder 4, **dadurch gekennzeichnet, dass** der Backvorgang bei einer Temperatur zwischen 200 und 220 °C durchgeführt wird für eine Dauer zwischen 20 und 30 Minuten, wobei der Wasserdampf ganz zu Beginn der Färbung des Teigs abgelassen wird.

## Claims

1. Method for making unleavened long-life bread, the dough of which is based on flour, water, salt and yeast, **characterized in that** the dough has the following composition, expressed as parts by weight:
| | |
|---|---|
| - bread-making four | 100 parts |
| - water | 90 to 100 parts |
| - salt | 2 to 3 parts |
- baker's yeast 0.05 to 0.1 part, i.e. the quantity by weight of yeast relative to the flour is between 0.05% and 0.1%,
and **in that** the flour used is a protein-rich flour comprising between 12% and 15% protein and originating from one or more ungerminated wheats, **in that** fermentation lasts in excess of 36 hours, **in that** the dough is kneaded in a single step at variable speed, the total duration of which is at least 40 minutes, salt being added to the dough at the end of kneading, and, lastly, **in that** the temperature of the dough remains below 30°C throughout fermentation and/or throughout kneading.

2. Method according to Claim 1, **characterized in that** the moisture content of the dough before fermentation is between 90 and 100%.

3. Method according to either of Claim 1 or 2, **characterized in that** a dough is prepared by mixing flour, water and yeast, **in that** said dough is kneaded in a single step at variable speed, then **in that** the dough is separated into individual portions of the order of 5 to 20 kg, **in that** the dough is rested such that the total fermentation duration is in excess of 36 hours, and **in that** the dough is shaped by hand, balls of dough being cut therefrom, prior to immediately proceeding to baking without allowing a second fermentation.

4. Method for making bread according to one of the preceding claims, **characterized in that** the kneading speed is faster at the end than at the beginning.

5. Method for making bread according to one of Claims 3 or 4, **characterized in that** baking takes place at a temperature of between 200 and 220°C for a duration of between 20 and 30 minutes, the steam being removed right at the start of the browning of the dough.
